# DEMANDE DE BREVET EUROPEEN

(11) **EP 1 884 167 A1**
(43) Date de publication de la demande: **06.02.2008**
(21) Numéro de dépôt: 06291260.5
(22) Date de dépôt: 03.08.2006
(51) Int. Cl.: A23G 9/28, A23G 9/48

(54) **Procédé de fabrication de glace**

(30) Priorité: 25.07.2006 FR 0606792
(71) Demandeur: Laduree Monaco, Monaco (MC)
(72) Inventeur: Holder, David, Monaco (MC)
(74) Mandataire: de Kernier, Gabriel

(57) **Abrégé**

Procédé de fabrication de glace, comprenant les étapes suivantes :
-refroidissement d'un mélange liquide à une température négative pour former de la glace de consommation foisonnée,
- apport et mélange à ladite glace de corps comestibles, et
- extrusion du mélange.

## Description

La présente invention concerne le domaine de la fabrication sur place de glace destinée à être consommée rapidement.

Le document WO 2005/039302 (Carpigiani) décrit un appareil de fabrication de glace.

De façon générale, les glaces dites « à l'italienne » sont foisonnées en ce qu'elles comportent une multitude de petites bulles d'air leur conférant une consistance onctueuse. Ces glaces sont foisonnées à la demande quelques instants avant la vente et la consommation par le client.

Par ailleurs, on connaît également des glaces industrielles fabriquées en usine et vendues dans les magasins d'alimentation. Ce type de glaces peut comporter des inclusions de pépites de chocolat ou de grains de raisins.

La demanderesse s'est aperçue qu'il existe un besoin non satisfait de glace présentant les avantages gustatifs de la glace foisonnée à la demande et des inclusions existant dans les glaces industrielles.

L'invention vise donc à fabriquer une glace présentant ces avantages combinés.

Le procédé de fabrication de glace comprend le refroidissement d'un mélange liquide à une température négative pour former de la glace de consommation foisonnée, l'apport et le mélange à la glace de consommation de corps comestibles, et l'extrusion du mélange de glace de consommation et de corps comestibles.

La demanderesse s'est alors aperçue que l'invention présentait l'avantage supplémentaire de permettre l'utilisation de corps comestibles frais ou fragiles dans la glace foisonnée.

Le procédé s'applique notamment à la glace de consommation immédiate, sur place ou à emporter.

Il s'avère particulièrement avantageux d'inclure des corps comestibles fragiles tels que des macarons, des sablés, des pâtisseries du même genre ou encore des fruits frais dans la glace de consommation foisonnée, ce qui permet d'obtenir un résultat gustatif de très haute qualité.

Dans un mode de réalisation, l'étape de refroidissement a lieu préalablement à l'étape d'apport et de mélange de corps comestibles. On limite ainsi l'humidification des corps comestibles.

Dans un mode de réalisation, l'étape de refroidissement a lieu après l'étape d'apport et de mélange de corps comestibles. On favorise la conservation de la glace.

Dans un mode de réalisation, les corps comestibles comprennent des biscuits, des gâteaux, des fruits, du chocolat et/ou du caramel.

Dans un mode de réalisation, les corps comestibles sont à l'état congelé lors de l'apport et du mélange à la glace de consommation.

Dans un mode de réalisation, les corps comestibles sont à l'état frais lors de l'apport et du mélange à la glace de consommation. On obtient une haute qualité gustative.

Dans un mode de réalisation, le corps comestibles sont fractionnés avant l'apport et le mélange à la glace de consommation.

Dans un mode de réalisation, le mélange est effectué par une vis sans fin entraînée en rotation.

Dans un mode de réalisation, le procédé comprend une étape de purge postérieure à l'extrusion dudit mélange et préalable à la fabrication de la glace suivante. On peut ainsi fabriquer des glaces de parfums différents de façon successive sur un poste d'extrusion d'une machine à glace.

Dans un mode de réalisation, le taux de foisonnement est compris entre 20 et 120 %.

Dans un mode de réalisation, un couteau fixe découpe les corps comestibles.

Dans un mode de réalisation, on associe un mélange liquide d'un parfum à des corps comestibles de plusieurs parfums pour obtenir des glaces ayant différents parfums, une glace comprenant des corps comestibles d'un seul parfum. On peut ainsi stocker un mélange liquide par machine à glace ce qui permet une compacité et une simplicité accrues.

L'invention concerne une machine de fabrication de glace comprenant un élément de refroidissement d'un mélange liquide à une température négative pour former de la glace de consommation foisonnée, un élément d'apport et de mélange à ladite glace de corps comestibles, et un élément d'extrusion du mélange.

Dans un mode de réalisation, la machine comprend un réservoir de mélange liquide et une goulotte d'approvisionnement en corps comestibles.

Dans un mode de réalisation, l'élément d'apport et de mélange comprend une entrée de glace de consommation foisonnée, une entrée de corps comestibles, et une vis de mélange et d'avancement.

Dans un mode de réalisation, la machine comprend un élément de chasse à l'air comprimé pour purger l'élément d'extrusion entre deux glaces de parfums différents.

Dans un mode de réalisation, la machine comprend un couteau de découpe des corps comestibles. Le couteau peut être fixe ou mobile, éventuellement associé à un contre couteau ou à un piston pousseur.

La présente invention sera mieux comprise à la lecture de la description détaillée de quelques modes de réalisation décrits à titre d'exemples nullement limitatifs et illustrés sur les dessins annexés :
- la figure 1 est une vue schématique en perspective d'une machine à glace selon un aspect de l'invention ; et
- la figure 2 est une vue schématique de la structure interne de la machine.

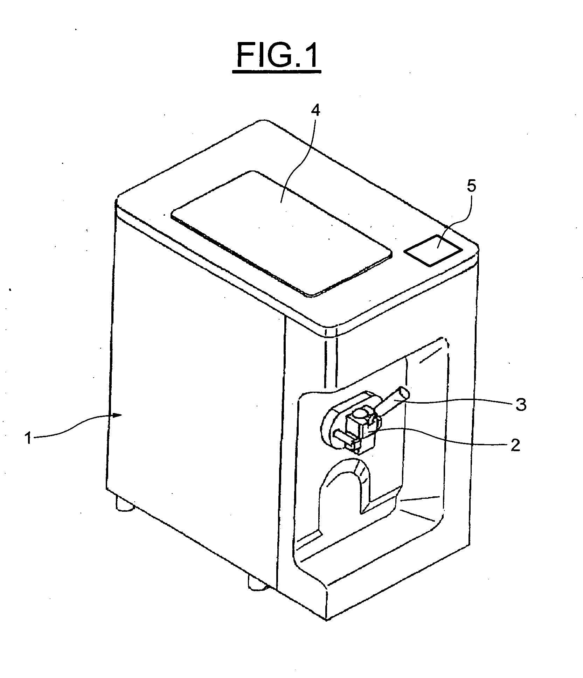

Comme on peut le voir sur la figure 1, une machine à glace comprend un corps 1 sur une face avant duquel est prévue une vanne 2 commandée par une poignée 3 provoquant ou interrompant l'extrusion de glace foisonnée de consommation. Sur une face supérieure du corps 1, sont prévus un réservoir 4 de mélange liquide et une ouverture 5 pour l'alimentation de la machine encore comestible solide.

Le réservoir 4 de mélange liquide peut être régulé à une température faiblement positive, par exemple de l'ordre de 1° à 6°, et présenter une contenance importante, de l'ordre de quelques litres à quelques dizaines de litres pour limiter le nombre de réapprovisionnements.

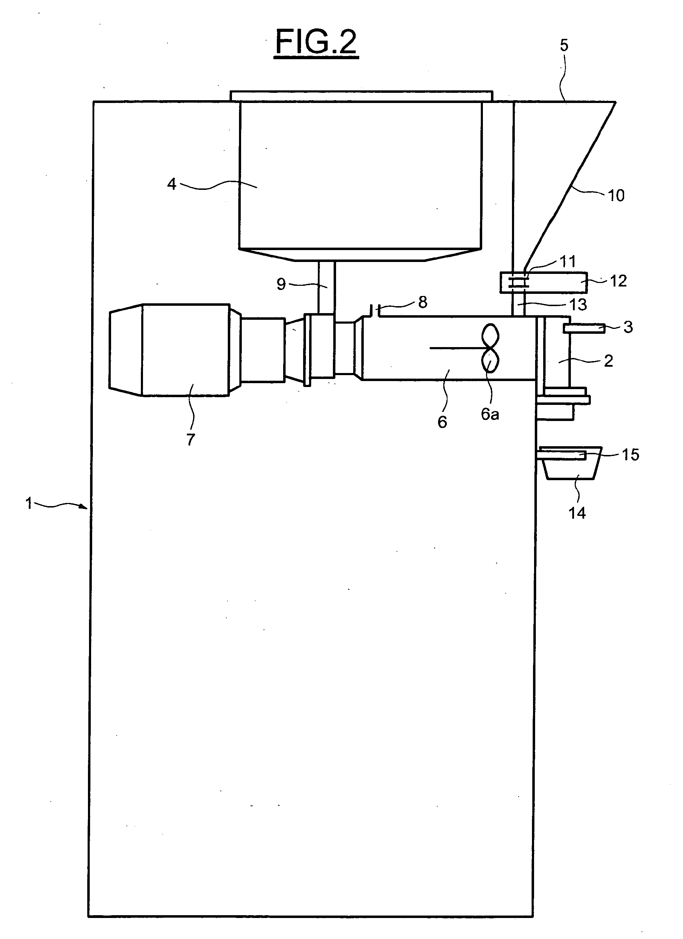

Comme on le voit plus en détail sur la figure 2, la machine à glace comprend également une chambre froide 6 refroidie par un ensemble réfrigérant, non représenté, comprenant par exemple un compresseur entraîné par un moteur, un condenseur et un évaporateur entourant la chambre froide 6. La chambre froide 6 peut être régulée à une température légèrement négative. Un agitateur 6a est disposé dans la chambre froide 6 et entraîné en rotation par un moteur 7.

Une entrée d'air 8 est prévue dans la chambre froide 6 pour le foisonnement du mélange liquide en provenance du réservoir 4, par l'agitateur 6a de la chambre froide 6 au cours du refroidissement. L'entrée d'air 8 peut être une entrée d'air ambiant, ou encore d'air préalablement refroidi grâce à l'évaporateur disposé autour de la chambre froide 6, ou enfin d'air sous pression supérieur à la pression atmosphérique afin de mettre l'intérieur de la chambre froide 6 sous une pression supérieure à la pression atmosphérique, ce qui facilite encore le foisonnement.

Le mélange provenant du réservoir 4 passe dans une conduite 9 pour arriver dans la chambre froide 6, puis dans une portion aval de la chambre froide 6 dans laquelle il est mélangé avec des corps comestibles solides ou pâteux provenant d'une goulotte 10 pourvue d'une ouverture supérieure 5 visible sur la figure 1.

La goulotte 10 peut être de type tronconique ou encore de section constante, non représentée. Dans le bas de la goulotte 10, est installé un organe de fractionnement des corps comestibles disposés dans la goulotte 10, par exemple réalisé sous la forme d'un couteau 11 rotatif entraîné par un moteur 12.

Entre le couteau 11 et la chambre froide 6, est prévue une conduite 13 pour amener les fractions de corps comestible dans la partie aval de la chambre froide 6. En aval de la chambre froide 6, sont disposées la vanne 2 et la poignée de commande 3. La vanne 2 possède une ouverture d'écoulement aval en position inférieure, pour distribuer la glace dans un gobelet 14 supporté par des bras 15 du corps 1.

Après remplissage du réservoir 4 en mélange liquide et mise en température de la chambre froide 6, la machine à glace peut fonctionner. Un opérateur peut disposer un corps comestible, par exemple de type biscuit, gâteau, fruit, chocolat, caramel, plus particulièrement un macaron, dans la goulotte 10 par l'ouverture supérieure 5. Le corps comestible descend jusqu'au couteau 11, entraîné en mouvement par le moteur 12, ce qui provoque la découpe du corps comestible en fractions de plus petite taille, par exemple des morceaux de l'ordre de 10 à 20 mm.

Simultanément, un mélange foisonné et refroidi à une température négative dans la chambre froide 6, est agité par l'agitateur 6a entraîné par le moteur 7, d'où un mélange de la glace foisonnée et des morceaux de corps comestibles dans la partie aval de la chambre froide 6. L'utilisateur peut ensuite actionner la poignée 3 pour ouvrir la vanne 2, ce qui provoque l'écoulement de la glace vers le bas dans le gobelet 14, ladite glace comprenant ainsi une partie de glace foisonnée à une température négative et une partie composée de morceaux du corps comestibles introduits.

A titre de variante, il est possible d'introduire les morceaux de corps comestibles plus en amont dans la chambre froide 6, afin de favoriser une meilleure homogénéité et un refroidissement plus prononcé des morceaux de corps comestibles.

Dans un mode de réalisation, la goulotte 10 est également réfrigérée, à une température négative ou faiblement positive, par exemple de l'ordre de 1° à 5°, pour améliorer la conservation des corps comestibles et diminuer leur prise d'humidité lors du mélange dans la chambre froide 6.

Dans un mode de réalisation, le taux de foisonnement est compris entre 20 et 120% en volume.

Dans un mode de réalisation, le couteau 11 est fixe, la découpe du ou des corps comestibles étant obtenue par leur vitesse d'arrivée sur le couteau fixe.

Lors de l'extrusion d'une portion de glace chargée de morceaux de comestibles solides ou pâteux, la glace s'écoule dans la chambre froide 6 vers la vanne 2 pour tomber dans le gobelet 14, la chambre froide étant réalimentée en mélange liquide en provenance du réservoir 4 par la conduite 9, de telle sorte que l'extrusion de la glace suivante soit possible dès la fin du remplissage du gobelet 14, le mélange liquide se refroidissant et foisonnant rapidement dans la chambre froide 6.

Grâce à l'invention, on parvient à obtenir des glaces mixtes, contenant à la fois des produits de pâtisserie ou de biscuiterie, ou encore des fruits, du chocolat et/ou du caramel à l'état solide ou pâteux, et de la glace foisonnée de haute qualité gustative.

Le mélange entre les deux constituants principaux étant effectué à la demande et quelques secondes avant l'extrusion de la glace, les corps comestibles ajoutés à la glace conservent leur qualité d'origine, notamment leur humidité. On peut ainsi prévoir d'incorporer des corps croustillants au sein d'une glace foisonnée.

## Revendications

1. Procédé de fabrication de glace, comprenant les étapes suivantes :
- refroidissement d'un mélange liquide à une température négative pour former de la glace de consommation foisonnée,
- apport et mélange à ladite glace de corps comestibles, et
- extrusion du mélange.

2. Procédé selon la revendication 1, dans lequel l'étape de refroidissement a lieu préalablement à l'étape d'apport et de mélange de corps comestibles.

3. Procédé selon la revendication 1, dans lequel l'étape de refroidissement a lieu après l'étape d'apport et de mélange de corps comestibles.

4. Procédé selon l'une quelconque des revendications précédentes, dans lequel les corps comestibles comprennent des biscuits, des gâteaux, des fruits, du chocolat et/ou du caramel.

5. Procédé selon l'une quelconque des revendications précédentes, dans lequel les corps comestibles sont à l'état congelé lors de l'apport et du mélange à la glace de consommation.

6. Procédé selon l'une quelconque des revendications 1 à 4, dans lequel les corps comestibles sont à l'état frais lors de l'apport et du mélange à la glace de consommation.

7. Procédé selon l'une quelconque des revendications précédentes, dans lequel le corps comestibles sont fractionnés avant l'apport et le mélange à la glace de consommation.

8. Procédé selon l'une quelconque des revendications précédentes, dans lequel le mélange est effectué par une vis sans fin entraînée en rotation.

9. Procédé selon l'une quelconque des revendications précédentes, comprenant une étape de purge postérieure à l'extrusion dudit mélange et préalable à la fabrication de la glace suivante.

10. Procédé selon l'une quelconque des revendications précédentes, dans lequel le taux de foisonnement est compris entre 20 et 120 %.

11. Procédé selon l'une quelconque des revendications précédentes, dans lequel un couteau fixe découpe les corps comestibles.

12. Machine de fabrication de glace, **caractérisée par le fait qu'**elle comprend un élément de refroidissement d'un mélange liquide à une température négative pour former de la glace de consommation foisonnée, un élément d'apport et de mélange à ladite glace de corps comestibles, et un élément d'extrusion du mélange.

13. Machine selon la revendication 12, comprenant un réservoir de mélange liquide et une goulotte d'approvisionnement en corps comestibles.

14. Machine selon la revendication 12, dans laquelle l'élément d'apport et de mélange comprend une entrée de glace de consommation foisonnée, une entrée de corps comestibles, et une vis de mélange et d'avancement.

15. Machine selon la revendication 12, comprenant un élément de chasse à l'air comprimé pour purger l'élément d'extrusion entre deux glaces de parfums différents.
